# EUROPEAN PATENT APPLICATION

(11) **EP 4 641 994 A1**
(43) Date of publication of application: **29.10.2025**
(21) Application number: 24212313.1
(22) Date of filing: 12.11.2024
(51) Int. Cl.: H04L 41/0806, H04W 48/20, H04W 24/02

(54) **PHOTOVOLTAIC DISTRIBUTION NETWORK SYSTEM AND NETWORK CONFIGURATION METHOD FOR PHOTOVOLTAIC DISTRIBUTION NETWORK SYSTEM**

(30) Priority: 28.04.2024 CN 202410532854
(71) Applicant: Sungrow Power Supply Co., Ltd., Hefei, Anhui 230088 (CN)
(72) Inventor: CHEN, Feng, Hefei, 230088 (CN); ZHANG, Changhao, Hefei, 230088 (CN); XU, Shun'an, Hefei, 230088 (CN)
(74) Representative: Rooney, John-Paul

(57) **Abstract**

A photovoltaic distribution network system and a network configuration method therefor are provided. The photovoltaic distribution network system includes a distribution network control device, multiple photovoltaic devices and a router. The distribution network control device is configured to generate a device list including device information of to-be-configured devices, and transmit the device list and network configuration information to the to-be-configured devices. The to-be-configured device is configured to broadcast device information of the to-be-configured devices based on the network configuration information. The router is configured to receive the device information broadcast by the to-be-configured devices, and establish a communication connection with a first distribution network device among the to-be-configured devices based on device information of the first distribution network device. The first distribution network device is configured to receive device information broadcast by a to-be-configured device not in a communication connection, and establish a direct or indirect communication connection with the to-be-configured device not in the communication connection. With the method, the communication quality between the photovoltaic device and the router is improved, and the hardware cost of the photovoltaic distribution network system is reduced.

## Description

### FIELD

The present disclosure relates to the field of photovoltaic power generation, and in particular to a photovoltaic distribution network system and a network configuration method for a photovoltaic distribution network system.

### BACKGROUND

In a photovoltaic distribution network system, multiple photovoltaic devices are connected to a router through Wi-Fi (Wireless Fidelity). Some of the photovoltaic devices may be far away from the router, resulting in poor quality of the Wi-Fi signal. As a result, communication between the photovoltaic device and the router is unstable, or even the photovoltaic device fails to connect to the router. In the conventional technology, the communication quality between the photovoltaic device and the router is improved by adjusting a position of the router, arranging an antenna extension line for the photovoltaic device, arranging a Wi-Fi signal amplifier or the like. These manners fail to ensure the communication quality of each photovoltaic device effectively if the number of the photovoltaic devices is large, resulting in relatively high hardware cost.

### SUMMARY

In view of this, the present disclosure is to provide a photovoltaic distribution network system and a network configuration method for the photovoltaic distribution network system, to improve the communication quality between the photovoltaic device and the router without additional hardware, and reduce the hardware cost and maintenance cost of the photovoltaic distribution network system.

In a first aspect, a photovoltaic distribution network system is provided according to the present disclosure. The photovoltaic distribution network system includes a distribution network control device, multiple photovoltaic devices, and a router. The distribution network control device is configured to generate a device list including device information of to-be-configured devices, and transmit the device list and network configuration information to the to-be-configured devices; where the to-be-configured devices include at least one of the multiple photovoltaic devices, and the network configuration information is for controlling access to a specified network. The to-be-configured device is configured to broadcast the device information of the to-be-configured devices based on the network configuration information. The router is configured to receive the device information broadcast by the to-be-configured device, and establish a communication connection with a first distribution network device among the to-be-configured devices based on device information of the first distribution network device. The first distribution network device is configured to receive device information broadcast by a to-be-configured device not in a communication connection, and establish a direct or indirect communication connection with the to-be-configured device not in the communication connection based on the device information broadcast by the to-be-configured device not in the communication connection.

The distribution network control device is further configured to scan device identifiers of the to-be-configured devices to obtain the device information of the to-be-configured devices.

The distribution network control device is further configured to establish a communication connection with a first photovoltaic device among the multiple photovoltaic devices, and transmit the network configuration information to the first photovoltaic device. The first photovoltaic device is configured to search for device information, determine the obtained device information as device information of a candidate distribution network device, and transmit the device information of the candidate distribution network device to the distribution network control device. The distribution network control device is further configured to determine the to-be-configured device based on the device information of the candidate distribution network device.

The distribution network control device is further configured to transmit the device list to the first photovoltaic device. The first photovoltaic device is further configured to transmit the device list and the network configuration information to the to-be-configured devices.

The distribution network control device is further configured to transmit query information to each of the to-be-configured devices. The query information is used to query whether the device list and the network configuration information are received by the to-be-configured device. The to-be-configured device is further configured to, on receipt of the device list and the network configuration information, transmit confirmation information corresponding to the query information to the distribution network control device.

The router is further configured to determine, based on the received device information broadcast by the to-be-configured device, a to-be-configured device corresponding to device information indicating the strongest broadcast signal as the first distribution network device.

The first distribution network device is further configured to determine, based on the device information broadcast by the to-be-configured device not in the communication connection, a second distribution network device from the to-be-configured device not in the communication connection; and establish a communication connection with the second distribution network device based on device information of the second distribution network device. The second distribution network device is configured to determine the second distribution network device as an updated first distribution network device, and continue to perform the process of determining a second distribution network device from the to-be-configured device not in the communication connection based on the device information broadcast by the to-be-configured device not in the communication connection; and establishing a communication connection with the second distribution network device based on device information of the second distribution network device until all the to-be-configured devices are in the communication connection.

The first distribution network device is further configured to determine a to-be-configured device corresponding to device information indicating a broadcast signal strength reaching a preset strength threshold as the second distribution network device based on the device information broadcast by the to-be-configured device not in the communication connection.

The first distribution network device is further configured to select, if a quantity of the to-be-configured device corresponding to the device information indicating the broadcast signal strength reaching the preset strength threshold is greater than a preset quantity threshold, the preset quantity threshold of the to-be-configured device as the second distribution network device from the to-be-configured device corresponding to the device information indicating the broadcast signal strength reaching the preset strength threshold.

A to-be-configured device in a communication connection is further configured to detect a communication connection quality between the first distribution network device and the router; and update the first distribution network device if the communication connection quality is lower than a preset quality threshold. The updated first distribution network device is configured to establish a new communication connection with the router; receive device information broadcast by the to-be-configured device not in the new communication connection, and establish a direct or indirect communication connection with the to-be-configured device not in the new communication connection based on the device information broadcast by the to-be-configured device not in the new communication connection.

The to-be-configured device in the communication connection is further configured to obtain a communication connection quality between each of the to-be-configured devices and the router; and determine the to-be-configured device with the highest communication connection quality as the updated first distribution network device.

In a second aspect, a network configuration method for a photovoltaic distribution network system is provided according to the present disclosure, and is applied to any one photovoltaic distribution network system described above. The photovoltaic distribution network system includes the distribution network control device, the multiple photovoltaic devices and the router. The method includes generating, by the distribution network control device, a device list including device information of to-be-configured devices, and transmitting, by the distribution network control device, the device list and network configuration information to the to-be-configured devices, where the to-be-configured devices include at least one of the multiple photovoltaic devices, and the network configuration information is for controlling access to a specified network; broadcasting, by the to-be-configured device, device information of the to-be-configured devices based on the network configuration information; receiving, by the router, the device information broadcast by the to-be-configured device, and establishing, by the router, a communication connection with a first distribution network device among the to-be-configured devices based on device information of the first distribution network device; and receiving, by the first distribution network device, device information broadcast by a to-be-configured device not in a communication connection, and establishing, by the first distribution network device, a direct or indirect communication connection with the to-be-configured device not in the communication connection based on the device information broadcast by the to-be-configured device not in the communication connection.

The present disclosure has the following beneficial effects.

The photovoltaic distribution network system and the network configuration method for the photovoltaic distribution network system are provided according to the present disclosure. The photovoltaic distribution network system includes a distribution network control device, multiple photovoltaic devices, and a router. The distribution network control device is configured to generate a device list including device information of to-be-configured devices, and transmit the device list and network configuration information to the to-be-configured devices, where the to-be-configured devices include at least one of the multiple photovoltaic devices, and the network configuration information is for controlling access to a specified network. The to-be-configured device is configured to broadcast device information of the to-be-configured device based on the network configuration information. The router is configured to receive the device information broadcast by the to-be-configured device, and establish a communication connection with a first distribution network device among the to-be-configured devices based on device information of the first distribution network device. The first distribution network device is configured to receive device information broadcast by a to-be-configured device not in the communication connection, and establish a direct or indirect communication connection with the to-be-configured device not in the communication connection based on the device information broadcast by the to-be-configured device not in the communication connection.

In this method, the distribution network control device generates the device list including the device information of the to-be-configured devices, and transmits the device list and the network configuration information of the specified network to the to-be-configured devices, to control the to-be-configured device to access to the specified network corresponding to the network configuration information. The to-be-configured device accessing to the specified network may broadcast the device information of the to-be-configured devices through the network configuration information. The router receives the device information broadcast by the to-be-configured device, and establishes communication connection with any to-be-configured device based on the received device information of the device. Those to-be-configured devices not in communication connection with the router may establish communication connection with the router by using the device. In this way, all the to-be-configured devices accessing to the specified network can be communicatively connected to the router as long as any to-be-configured device accessing to the specified network is in the communication connection with the router, so that multiple to-be-configured photovoltaic devices can be connected to the router without additional hardware, improving the communication quality between the photovoltaic device and the router, and reducing the hardware cost and the maintenance cost of the photovoltaic distribution network system.

Other features and advantages of the present disclosure are described in the subsequent specification and, in part, become apparent from the specification or are understood by implementing the present disclosure. The objectives and other advantages of the present disclosure are realized and obtained through the specification, the claims, and the structure specially pointed out in the drawings.

In order to make the above objectives, features and advantages of the present disclosure more comprehensible, preferred embodiments are described in detail in conjunction with drawings below.

### BRIEF DESCRIPTION OF THE DRAWINGS

In order for a clearer illustration of technical solutions in the embodiments of the present disclosure or the conventional technology, drawings used in the description of the embodiments or the conventional technology are briefly introduced below. Apparently, the drawings in the following description show only some embodiments of the present disclosure, and other drawings may be obtained by those skilled in the art from the drawings without any creative work.
FIG. 1 is a schematic diagram illustrating that a router communicates with photovoltaic devices according to an embodiment of the present disclosure;
FIG. 2 is a schematic diagram illustrating that a router communicates with photovoltaic devices according to another embodiment of the present disclosure;
FIG. 3 is a schematic diagram illustrating that a router communicates with photovoltaic devices according to another embodiment of the present disclosure;
FIG. 4 is a schematic diagram of communication of a photovoltaic distribution network system according to an embodiment of the present disclosure;
FIG. 5 is a schematic diagram of a network topology of to-be-configured devices according to an embodiment of the present disclosure;
FIG. 6 is a flowchart of a network configuration method for a photovoltaic distribution network system according to an embodiment of the present disclosure;
FIG. 7 is a schematic flowchart of sharing a device list and network configuration information according to an embodiment of the present disclosure;
FIG. 8 is a schematic flowchart of implementing interconnection and intercommunication of to-be-configured devices according to an embodiment of the present disclosure;
FIG. 9 is a schematic diagram of a network topology of a photovoltaic distribution network system according to an embodiment of the present disclosure; and
FIG. 10 is a schematic diagram of three-party interaction in a network configuration method for a photovoltaic distribution network system according to an embodiment of the present disclosure.

### DETAILED DESCRIPTION

In order to make objectives, technical solutions, and advantages of the embodiments of the present disclosure more clear, the technical solutions of the present disclosure are clearly and completely described below with reference to the drawings. It is apparent that the embodiments described herein are only some embodiments of the present disclosure, rather than all the embodiments. Any other embodiments obtained by those skilled in the art based on the embodiments in the present disclosure without any creative work fall within the protection scope of the present disclosure.

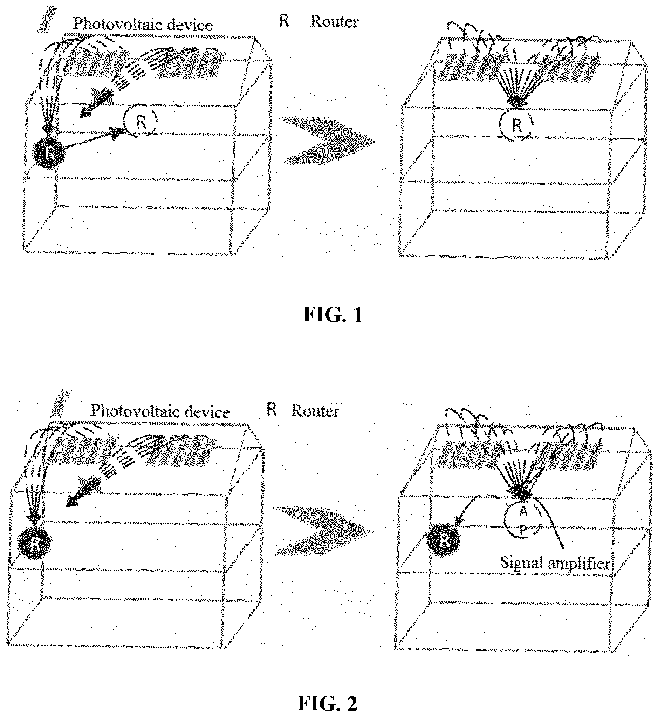

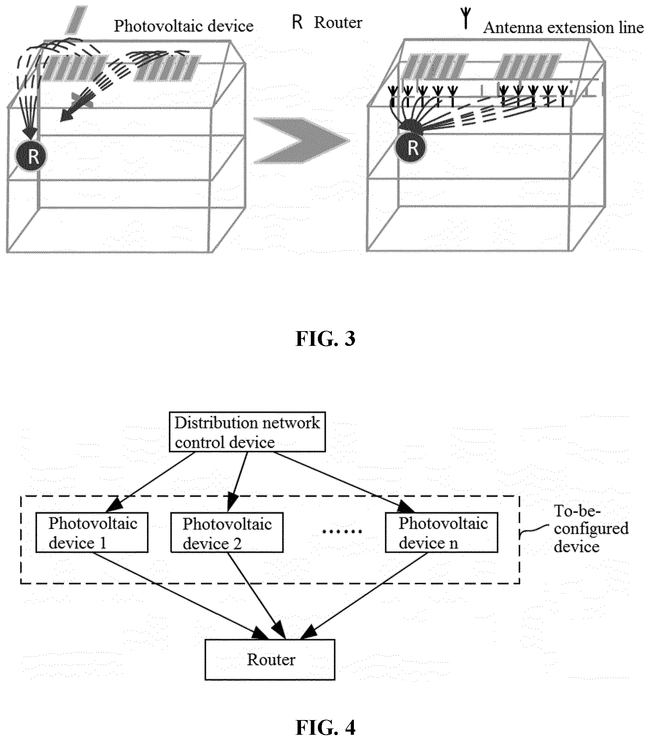

In a photovoltaic distribution network system, multiple photovoltaic devices are connected to a router through Wi-Fi. Some of the photovoltaic devices may be far away from the router, resulting in poor quality of Wi-Fi signals of some photovoltaic devices when being connected to the router. As a result, communication between the photovoltaic device and the router is unstable, or even the photovoltaic device fails to connect to the router. In order to solve the above problem, as shown in FIG. 1, a position of the router may be adjusted to enable the router to be close to a communication module of the photovoltaic device. Alternatively, as shown in FIG. 2, a Wi-Fi signal amplifier is arranged between the photovoltaic device and the router for amplifying the Wi-Fi signal, so that the photovoltaic device is connected to the router. However, the implementation of the two manners is based on the limitation on the number of the photovoltaic devices. If the number of the photovoltaic devices increases, the adjusting the position of the router or arranging the amplifier fails to ensure that all the devices are normally connected to the Wi-Fi. Alternatively, a micro-inverse antenna extension line may be arranged for each photovoltaic device, and the Wi-Fi signal is introduced to a position close to the router through the extension line, as shown in FIG. 3. However, in this manner, the antenna extension line is arranged for each device, resulting in waste of the cost. In addition, the cost for network connection is increased significantly with the increasing quantity of photovoltaic devices.

In view of the above problems, a photovoltaic distribution network system and a network configuration method for a photovoltaic distribution network system are provided according to embodiments of the present disclosure, which may be applied to a network configuration scenario for multiple photovoltaic devices.

In order to facilitate understanding of the embodiment, a photovoltaic distribution network system disclosed in the embodiment of the present disclosure is first described in detail. FIG. 4 is a schematic diagram of communication of a photovoltaic distribution network system according to an embodiment of the present disclosure. As shown in FIG. 4, the photovoltaic distribution network system includes a distribution network control device, multiple photovoltaic devices and a router, where the distribution network control device may be an intelligent device such as a tablet computer and a mobile terminal. The distribution network control device may be configured to generate a device list including device information of to-be-configured devices, and transmit the device list and network configuration information to the to-be-configured devices, where the to-be-configured devices include at least one of the multiple photovoltaic devices, and the network configuration information is for controlling access to a specified network.

The to-be-configured device may be any photovoltaic device waiting to access to the specified network. The device list refers to a device list including to-be-configured devices to access to the specified network. The device list includes device information of the to-be-configured devices, and the to-be-configured devices may be some or all of the multiple photovoltaic devices described above. The network configuration information may control the to-be-configured devices to access to the specified network. The specified network may be a wireless local area network, for example, a mesh (i.e., cellular wireless mesh) network. The network configuration information may include an account and a password of the specified network or other information.

The to-be-configured device may be determined from the multiple photovoltaic devices by using the intelligent device such as a tablet computer or a mobile terminal. For example, the intelligent device scans two-dimensional codes on the multiple photovoltaic devices to obtain the device information of the multiple photovoltaic devices, and then some or all of the multiple photovoltaic devices are determined as the to-be-configured devices as required, and the device list is generated based on the device information of the to-be-configured devices. Alternatively, all the photovoltaic devices in the system are determined as the to-be-distributed network devices by default. After the device list of the to-be-configured devices is determined, the device list and the network configuration information are transmitted to the to-be-configured devices in the device list, so that the to-be-configured devices in the device list obtain the device list and the network configuration information, thus controlling the to-be-configured devices in the device list to access to the specified network corresponding to the network configuration information.

The to-be-configured device is configured to broadcast the device information of the to-be-configured devices based on the network configuration information. Specifically, the to-be-configured device refers to any photovoltaic device in the device list, where the to-be-configured device that has received the device list and the network configuration information may access to the specified network based on the network configuration information, and broadcast, through the specified network, device information of itself and other to-be-configured devices in the device list to other to-be-configured devices or the router accessing to the specified network, so as to obtain the device information of other to-be-configured devices in the device list by using any one to-be-configured device accessing to the specified network.

The router is configured to receive the device information broadcast by the to-be-configured device, and establish, based on device information of a first distribution network device among the to-be-configured devices, a communication connection with the first distribution network device. Here, the first distribution network device may be any one to-be-configured device or multiple to-be-configured devices accessing to the specified network. In an embodiment, the first distribution network device may be a to-be-configured device corresponding to device information indicating the strongest broadcast signal if the router receives the device information broadcast by the to-be-configured device. Specifically, the router may receive the device information broadcast by the to-be-configured device, then obtain the device information of the first distribution network device accessing to the specified network from these device information, and establish the communication connection with the first distribution network device.

The first distribution network device is configured to receive device information broadcast by a to-be-configured device not in a communication connection, and establish a direct or indirect communication connection with the to-be-configured device not in the communication connection based on the device information broadcast by the to-be-configured device not in the communication connection. That is, the first distribution network device in communication connection with the router may receive, through the specified network, the device information broadcast by the to-be-configured device, and the first distribution network device may establish, through these device information, a direct or indirect communication connection with the to-be-configured device that has accessed to the specified network but not in the communication connection with the router, so that all the to-be-configured devices accessing to the specified network are in the communication connection with the router.

In an embodiment, the network configuration information includes an account and password of the mesh (i.e., cellular wireless mesh) network, and multiple to-be-distributed devices in the device list may access to the mesh network to form a network architecture of the mesh network. Each to-be-configured device accessing to the mesh network may be referred to as a node. Each to-be-configured device in the network may directly access or indirectly access to any node through another node, achieving the interconnection and intercommunication between the to-be-configured devices in the network. As long as the router is connected to any one device accessing to the mesh network, the to-be-configured devices accessing to the mesh network can be connected to the router through Wi-Fi, and those to-be-configured devices not in communication connection with the router may establish a communication connection with the router through the device.

The above photovoltaic distribution network system includes the distribution network control device, the multiple photovoltaic devices, and the router. The distribution network control device is configured to generate a device list including device information of the to-be-configured devices, and transmit the device list and network configuration information to the to-be-configured devices. The to-be-configured devices include at least one of the multiple photovoltaic devices. The network configuration information is for controlling access to the specified network. The to-be-configured device is configured to broadcast the device information of the to-be-configured devices based on the network configuration information. The router is configured to receive the device information broadcast by the to-be-configured device, and establish a communication connection with a first distribution network device among the to-be-configured devices based on device information of the first distribution network device. The first distribution network device is configured to receive device information broadcast by a to-be-configured device not in a communication connection, and establish a direct or indirect communication connection with the to-be-configured device not in the communication connection based on the device information broadcast by the to-be-configured device not in the communication connection. In this embodiment, the distribution network control device generates the device list including the device information of the to-be-configured devices, and transmits the device list and the network configuration information of the specified network to the to-be-configured devices, to control the to-be-configured devices to access to the specified network corresponding to the network configuration information. The to-be-configured device accessing to the specified network may broadcast the device information of the to-be-configured devices through the network configuration information. The router receives the device information broadcast by the to-be-configured device, and establishes a communication connection with any to-be-configured device based on the received device information of the device. Those to-be-configured devices not in communication connection with the router may establish communication connection with the router by using the device. In this way, all the to-be-configured devices accessing to the specified network can be communicatively connected to the router as long as any to-be-configured device accessing to the specified network is in the communication connection with the router, so that multiple to-be-configured photovoltaic devices can be connected to the router without additional hardware, improving the communication quality between the photovoltaic device and the router, and reducing the hardware cost and the maintenance cost of the photovoltaic distribution network system.

In an embodiment, the distribution network control device is further configured to scan device identifiers of the to-be-configured devices to obtain the device information of the to-be-configured devices.

During the actual implementation, the distribution network control device such as a tablet computer or a mobile terminal scans the device identifiers of the photovoltaic devices, to obtain the device information of the photovoltaic devices, the to-be-configured device is determined based on the device information of the multiple photovoltaic devices, and then the device information of the to-be-configured device is obtained.

In an embodiment, the distribution network control device is further configured to: establish a communication connection with a first photovoltaic device among the multiple photovoltaic devices, and transmit the network configuration information to the first photovoltaic device. The first photovoltaic device is configured to search for device information, determine the obtained device information as device information of a candidate distribution network device, and transmit the device information of the candidate distribution network device to the distribution network control device. The distribution network control device is further configured to determine the to-be-configured device based on the device information of the candidate distribution network device.

During the actual implementation, the distribution network control device may obtain the device information of the first photovoltaic device by scanning the device identifier of the photovoltaic device, establish a communication connection with the photovoltaic device, and transmit the network configuration information to the first photovoltaic device. The first photovoltaic device may also obtain the device information of other photovoltaic devices, determine the obtained device information as device information of candidate distribution network devices, and then transmit the device information of those candidate distribution network devices to the distribution network control device, so that the distribution network control device determines the to-be-configured device based on the received device information of the candidate distribution network devices.

In the foregoing embodiment, the distribution network control device may be further configured to transmit the device list to the first photovoltaic device. The first photovoltaic device is further configured to transmit the device list and the network configuration information to the to-be-configured devices.

After being communicatively connected to the first photovoltaic device, the distribution network control device transmits the determined device list to the first photovoltaic device, and the first photovoltaic device transmits the device list and the network configuration information to the to-be-configured devices.

In an embodiment, the distribution network control device is further configured to transmit query information to each of the to-be-configured devices; where the query information is used to query whether the device list and the network configuration information are received by the to-be-configured device. The to-be-configured device is further configured to transmit, on receipt of the device list and the network configuration information, confirmation information corresponding to the query information to the distribution network control device.

During the actual implementation, the distribution network control device further transmits the query information to each of the to-be-configured devices in the device list to query whether the device list and the network configuration information are received by the to-be-configured device, and the to-be-configured device transmits, on receipt of the device list and the network configuration information, confirmation information corresponding to the query information to the distribution network control device.

In an embodiment, the router is further configured to determine, based on the received device information broadcast by the to-be-configured device, the to-be-configured device corresponding to the device information indicating the strongest broadcast signal as the first distribution network device.

In this embodiment, after receiving the device information broadcast by the to-be-configured devices, the router determines, based on those device information, the to-be-configured device corresponding to the device information indicating the strongest broadcast signal as the first distribution network device. That is, the first distribution network device may be a to-be-configured device with the strongest broadcast signal received by the router, and the router establishes a communication connection with the first distribution network device.

In an embodiment, the first distribution network device is further configured to determine a second distribution network device from the to-be-configured device not in the communication connection based on the device information broadcast by the to-be-configured device not in the communication connection; and establish a communication connection with the second distribution network device based on device information of the second distribution network device. The second distribution network device is configured to determine the second distribution network device as the updated first distribution network device, and continue to perform the process of determining a second distribution network device from the to-be-configured device not in the communication connection based on the device information broadcast by the to-be-configured device not in the communication connection; and establishing a communication connection with the second distribution network device based on device information of the second distribution network device until all the to-be-configured devices are in the communication connection.

The second distribution network device may be understood as a to-be-configured device in the direct communication connection with the first distribution network device. The to-be-configured device not in the communication connection refers to a to-be-configured device not in communication connection with the first distribution network device and the router.

In other words, the first distribution network device may further determine, based on the received device information broadcast by the to-be-configured devices, the second distribution network device that may establish a direct communication connection with the first distribution network device. Then, the second distribution network device serves as the updated first distribution network device and determines, based on the received device information broadcast by the to-be-configured devices, a next to-be-configured device that may establish a direct communication connection with the second distribution network device as an updated second distribution network device. Then, the process of determining the second distribution network device as the first distribution network device and determining a next second distribution network device is continued until all the to-be-configured devices are in the communication connection. Here, the number of the second distribution network device in the direct communication connection with the first distribution network device may be one or more.

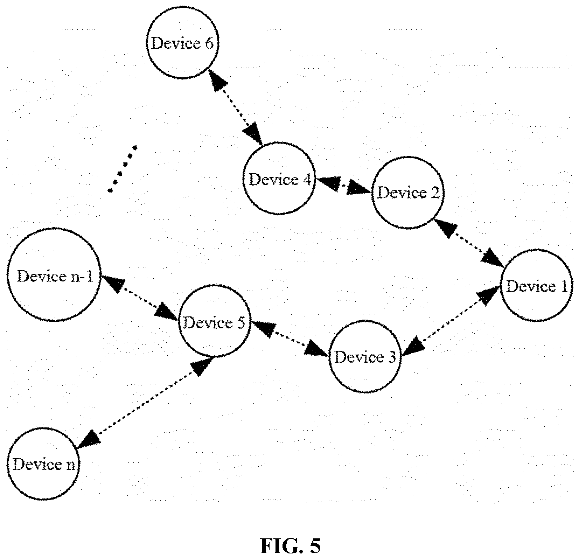

For example, as shown in FIG. 5, the first distribution network device is denoted by a device 1, and the device 1 may receive device information broadcast by at least one to-be-configured device among the to-be-configured devices not in the communication connection, such as a device 2 to a device N. The device 1 may determine, from the received device information, one or more to-be-configured devices as the second distribution network devices corresponding to the device 1, and establish a direct communication connection with the second distribution network devices. For example, the device 1 determines the to-be-configured device corresponding to the device information indicating the received strongest broadcast signal as the second distribution network device. That is, both the device 2 and the device 3 in FIG. 5 are the to-be-configured devices corresponding to the device information indicating the strongest broadcast signal received by the device 1, the device 2 and device 3 serve as the second distribution network devices corresponding to the device 1 and establish direct communication connections with the device 1. Further, the device 2 and the device 3 serve as the updated first distribution network devices to determine the corresponding second distribution network devices, and the second distribution network device corresponding to the device 2 is obtained as the device 4, and the second distribution network device corresponding to the device 3 is obtained as the device 5. The device 2 is in a direct communication connection with the device 4. The device 3 is in a direct communication connection with the device 5. The device 4 and the device 5 serve as the updated first distribution network devices to determine corresponding second distribution network devices until all the to-be-configured devices are in the communication connection, to obtain a schematic diagram of a network topology of the to-be-configured devices as shown in FIG. 5.

In an embodiment, the first distribution network device is further configured to determine a to-be-configured device corresponding to device information indicating a broadcast signal strength reaching a preset strength threshold as the second distribution network device based on the device information broadcast by the to-be-configured device not in the communication connection.

In other words, the second distribution network device may be the to-be-configured device corresponding to the device information, received by the first distribution network device, indicating the broadcast signal strength reaching the preset strength threshold.

Here, the first distribution network device may further determine, based on the received device information broadcast by the to-be-configured devices, a to-be-configured device whose broadcast signal strength reaches the preset strength threshold as the second distribution network device, so that the first distribution network device is in the direct communication connection with the second distribution network device. Then, the second distribution network device serves as the updated first distribution network device, and continues to determine, based on the device information broadcast by the to-be-configured device received by the updated first distribution network device, a to-be-configured whose broadcast signal strength reaches the preset strength threshold as a corresponding second distribution network device until all the to-be-configured devices are in the communication connection.

In an embodiment, the first distribution network device is further configured to select, if a quantity of the to-be-configured device corresponding to the device information indicating the broadcast signal strength reaching the preset strength threshold is greater than a preset quantity threshold, the preset quantity threshold of the to-be-configured device as the second distribution network device from the to-be-configured device corresponding to the device information indicating the broadcast signal strength reaching the preset strength threshold.

In other words, the first distribution network device determines, based on the received device information broadcast by the to-be-configured device, the to-be-configured device whose broadcast signal strength reaches the preset strength threshold as the second distribution network device. If it is determined that the quantity of the to-be-configured devices whose broadcast signal strength reaches the preset strength threshold is greater than the preset quantity threshold, only a first quantity of the to-be-configured device is selected from these to-be-configured devices as the second distribution network device, and the first quantity may be equal to the preset quantity threshold. In actual implementation, the to-be-configured devices corresponding to the device information indicating the broadcast signal strength reaching the preset strength threshold determined by the first distribution network device may be ranked in descending order according to the broadcast signal strength, and the first number of the to-be-configured device ranked first serve as the second distribution network device.

In an embodiment, the to-be-configured device in the communication connection is further configured to detect a communication connection quality between the first distribution network device and the router; and update the first distribution network device if the communication connection quality is lower than a preset quality threshold. The updated first distribution network device is configured to establish a new communication connection with the router; receive device information broadcast by the to-be-configured device not in the new communication connection, and establish a direct or indirect communication connection with the to-be-configured device not in the new communication connection based on the device information broadcast by the to-be-configured device not in the new communication connection.

The to-be-configured device in the communication connection refers to a to-be-configured device in the communication connection with other to-be-configured device and the router.

In this embodiment, the to-be-configured device in the communication connection may further detect the communication connection quality between the first distribution network device and the router and automatically update the first distribution network device if the communication connection quality is lower than the preset quality threshold. For example, the to-be-configured device with communication connection quality greater than or equal to the preset quality threshold is determined as the updated first distribution network device. Alternatively, the to-be-configured device with the highest communication connection quality is determined as the updated first distribution network device. In this case, the updated first distribution network device replaces the previous first distribution network device to establish a new communication connection with the router, and the updated first distribution network device re-determines the corresponding second distribution network device, so as to establish a direct or indirect communication connection with the to-be-configured device not in the communication connection, to obtain an updated network topology structure of the to-be-configured devices.

In an embodiment, the to-be-configured device in the communication connection is further configured to obtain a communication connection quality between each of the to-be-configured devices and the router; and determine a to-be-configured device with the highest communication connection quality as the updated first distribution network device.

In other words, the to-be-configured device in the communication connection may further obtain the communication connection quality between each of the to-be-configured devices and the router in real time, and determine the to-be-configured device with the highest communication connection quality as the updated first distribution network device.

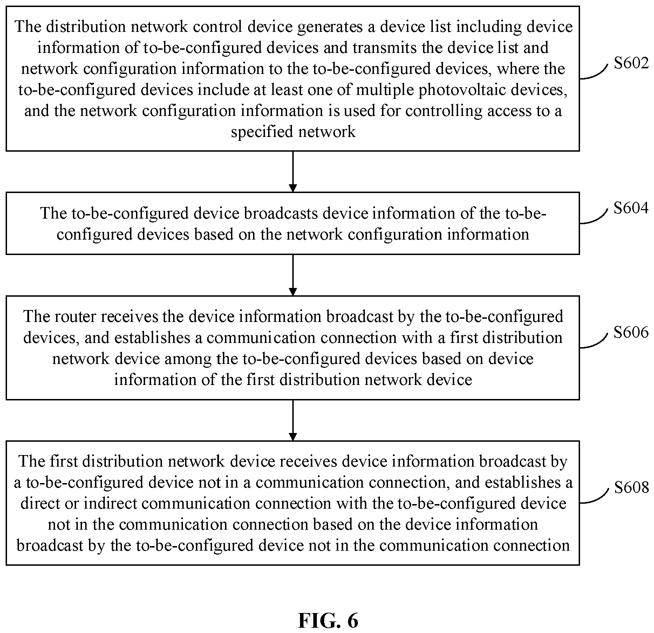

A network configuration method for a photovoltaic distribution network system is further provided according to an embodiment of the present disclosure, where the method is applied to the photovoltaic distribution network system. The photovoltaic distribution network system includes a distribution network control device, multiple photovoltaic devices and a router. Reference is made to FIG. 6, which is a flowchart of a network configuration method for a photovoltaic distribution network system. The method includes the following steps S602, S604, S606 and S608.

In step S602, the distribution network control device generates a device list including device information of to-be-configured devices and transmits the device list and network configuration information to the to-be-configured devices, where the to-be-configured devices include at least one of the multiple photovoltaic devices, and the network configuration information is for controlling access to a specified network.

The distribution network control device may be an intelligent device such as a tablet computer or a mobile terminal. The to-be-configured device may be any photovoltaic device waiting to access to the specified network. The device list refers to a device list including to-be-configured devices to access to the specified network. The device list is formed by the to-be-configured devices. The network configuration information may control the to-be-configured device to access the specified network. The specified network may be a wireless local area network, for example, the mesh (i.e., cellular wireless mesh) network. The network configuration information may include an account and a password of the specified network or other information.

Here, the to-be-configured device may be determined from the multiple photovoltaic devices by using the intelligent device such as a tablet computer or a mobile terminal. For example, the intelligent device scans two-dimensional codes on the multiple photovoltaic devices to obtain the device information of the multiple photovoltaic devices, and then some or all of the multiple photovoltaic devices are determined as the to-be-configured devices as required, and the device list is generated based on the device information of the to-be-configured devices. Finally, the device list and the network configuration information are transmitted to the to-be-configured devices in the device list, so that the to-be-configured devices in the device list obtain the device list and the network configuration information, thus controlling the to-be-configured devices in the device list to access to the specified network corresponding to the network configuration information.

In step S604, the to-be-configured device broadcasts device information of the to-be-configured devices based on the network configuration information.

The to-be-configured device that has received the device list and the network configuration information may access to the specified network based on the network configuration information, and broadcast, through the specified network, the device information of itself and other to-be-configured devices in the device list to other to-be-configured devices or the router accessing to the specified network, so that the device information of other to-be-configured devices in the device list can be obtained by using any one to-be-configured device accessing to the specified network.

In step S606, the router receives the device information broadcast by the to-be-configured device and establishes a communication connection with a first distribution network device among the to-be-configured devices based on device information of the first distribution network device.

The first distribution network device may be any one to-be-configured device accessing to the specified network.

The router may receive the device information broadcast by the to-be-configured devices, then obtain the device information of the first distribution network device accessing to the specified network from these device information, and establish the communication connection with the first distribution network device.

In step S608, the first distribution network device receives device information broadcast by a to-be-configured device not in a communication connection, and establishes a direct or indirect communication connection with the to-be-configured device not in the communication connection based on the device information broadcast by the to-be-configured device not in the communication connection.

Here, the first distribution network device in the communication connection with the router may receive, through the specified network, the device information broadcast by the to-be-configured devices, and the first distribution network device may establish, through these device information, a direct or indirect communication connection with the to-be-configured device that has accessed to the specified network but not in the communication connection with the router, so that all the to-be-configured devices accessing to the specified network are in the communication connection with the router.

The network configuration method for the photovoltaic distribution network system includes as follows. The distribution network control device generates a device list including device information of to-be-configured devices and transmits the device list and network configuration information to the to-be-configured devices, where the to-be-configured devices include at least one of the multiple photovoltaic devices, and the network configuration information is for controlling access to a specified network; the to-be-configured device broadcasts device information of the to-be-configured device based on the network configuration information; the router receives the device information broadcast by the to-be-configured device and establishes a communication connection with a first distribution network device among the to-be-configured devices based on device information of the first distribution network device; the first distribution network device receives device information broadcast by a to-be-configured device not in a communication connection, and establishes a direct or indirect communication connection with the to-be-configured device not in the communication connection based on the device information broadcast by the to-be-configured device not in the communication connection. In this method, the distribution network control device generates the device list including the device information of the to-be-configured devices, and transmits the device list and the network configuration information of the specified network to the to-be-configured devices, thus controlling the to-be-configured device to access to the specified network corresponding to the network configuration information. The to-be-configured device accessing to the specified network may broadcast the device information of the to-be-configured devices based on the network configuration information. The router receives the device information broadcast by the to-be-configured device, and establishes communication connection with any to-be-configured device based on the received device information of the device. Those to-be-configured devices not in communication connection with the router may establish communication connection with the router by using the device. In this way, all the to-be-configured devices accessing to the specified network can be communicatively connected to the router as long as any to-be-configured device accessing to the specified network is in the communication connection with the router, so that multiple to-be-configured photovoltaic devices can be connected to the router without additional hardware, improving the communication quality between the photovoltaic device and the router, and reducing the hardware cost and the maintenance cost of the photovoltaic distribution network system.

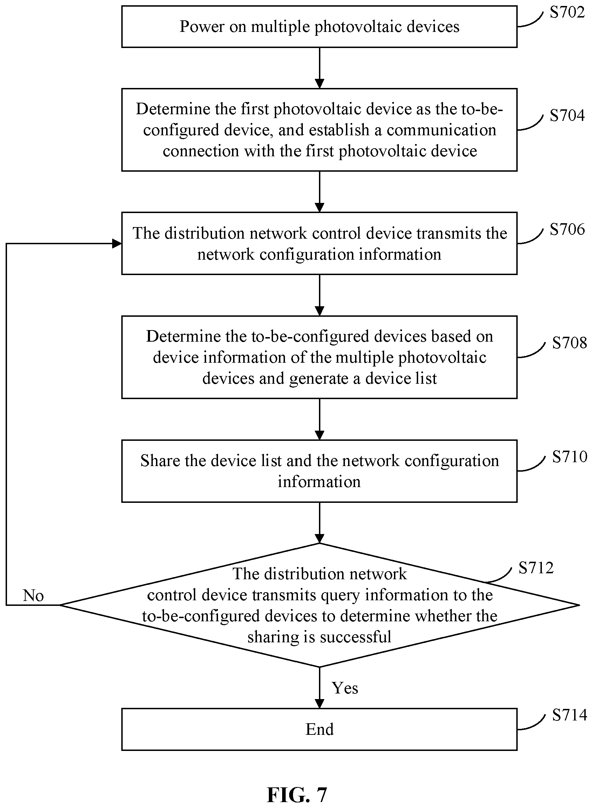

In an embodiment, the process of the distribution network control device generating the device list and controlling the to-be-configured devices to share the device list and the network configuration information is shown as FIG. 7.

In step S702, multiple photovoltaic devices are powered on.

The multiple photovoltaic devices are powered on to wait to access to a specified network.

In step S704, the first photovoltaic device is determined as the to-be-configured device, and the distribution network control device establishes a communication connection with the first photovoltaic device. The distribution network control device may obtain the device information of the first photovoltaic device by scanning the device identifier of the first photovoltaic device, determine the first photovoltaic device as the to-be-configured device, and establish the communication connection with the first photovoltaic device.

In step S706, the distribution network control device transmits the network configuration information. The distribution network control device transmits information such as the account of the specified network and the password of the specified network to the photovoltaic device in the communication connection.

In step S708, the to-be-configured devices are determined based on device information of the multiple photovoltaic devices, and the device list is generated. The distribution network control device may obtain the device information of the other multiple photovoltaic devices through the first photovoltaic device, or may obtain the device information of the other photovoltaic devices by scanning the device identifiers of the photovoltaic devices, finally determine the to-be-configured devices based on the device information, and generate the device list of the to-be-configured devices.

In step S710, the device list and the network configuration information are shared. The distribution network control device may transmit the device list and the network configuration information to each of the to-be-configured devices in the device list. The first photovoltaic device may also share the device list and the network configuration information with other to-be-configured devices.

In step S712, the distribution network control device transmits query information to each of the to-be-configured devices to determine whether the sharing is successful. If the sharing is unsuccessful, step S706 is performed. If the sharing is successful, step S714 is performed, i.e., the process ends.

The distribution network control device may transmit the query information to each of the to-be-configured devices, to query whether the device list and the network configuration information are received by the to-be-configured device, determine that the sharing is successful if a feedback from the to-be-configured device to the distribution network control device indicates that the device list and the network configuration information are received; and determine that the sharing is unsuccessful if a feedback from the to-be-configured device to the distribution network control device indicates that the device list and the network configuration information are not received.

Step S706 is performed if it is determined that the sharing is unsuccessful. The process ends if it is determined that the sharing is successful.

In this method, the distribution network control device may configure the network configuration information and the device list, to conveniently control the to-be-configured devices in the device list to access to the specified network corresponding to the network configuration information while preventing other photovoltaic devices from being mistakenly networked.

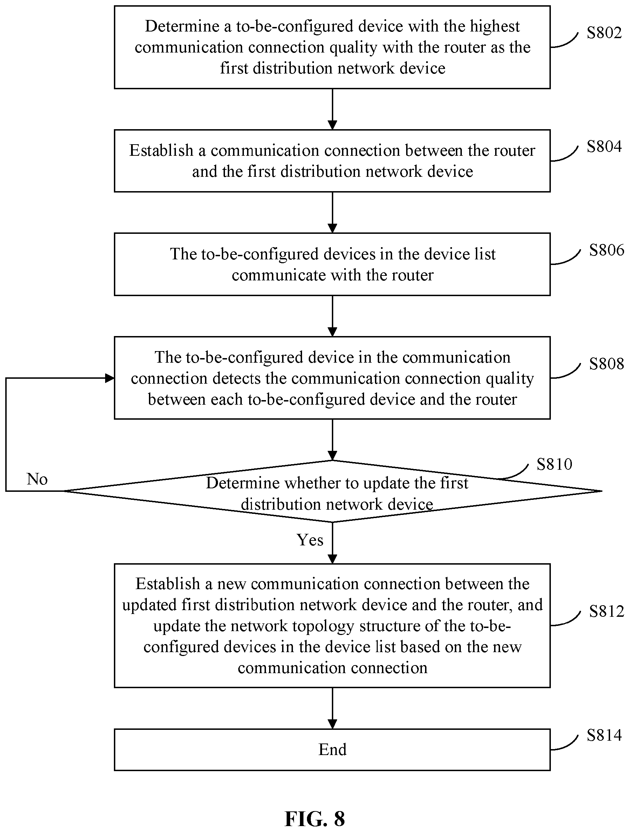

Further, after the sharing is successful, the networking is automatically started to implement interconnection and intercommunication of all the to-be-configured devices in the device list, and the detailed process is shown in FIG. 8.

In step S802, the to-be-configured device with the highest communication connection quality with the router is determined as the first distribution network device. Here, the router determines, based on the received device information broadcast by the to-be-configured devices, the to-be-configured device corresponding to the device information indicating the strongest broadcast signal as the first distribution network device.

In step S804, the router establishes a communication connection with the first distribution network device. The router establishes the communication connection with the first distribution network device after determining the first distribution network device.

In step S806, the to-be-configured devices in the device list communicate with the router.

The first distribution network device receives the device information broadcast by the to-be-configured device not in the communication connection, and establishes a direct or indirect communication connection with the to-be-configured device not in the communication connection in the device list, so that the to-be-configured devices in the device list communicate with the router.

For example, the specified network is a mesh network, each to-be-configured device is referred to as a node, each to-be-configured device in the network may directly access or indirectly access any node through other nodes, and the to-be-configured devices in the network achieve interconnection and intercommunication. In a case that the to-be-configured devices in the mesh network are to be connected to the router, since the router is in communication connection with the first distribution network device, those to-be-configured devices not in communication connection with the router may establish a communication connection with the router by using the first distribution network device, so that all the to-be-configured devices in the device list communicate with the router.

In step S808, the to-be-configured device in the communication connection detects the communication connection quality between each of the to-be-configured devices and the router. The to-be-configured device in the communication connection with the router may further obtain the communication connection quality between each of the to-be-configured devices and the router in real time, so as to update the to-be-configured device with the highest communication connection quality as the first distribution network device.

In step S810, it is determined whether to update the first distribution network device. Step S808 is performed if it is determined that the first distribution network device is not to be updated. Step S812 is performed if it is determined that the first distribution network device is to be updated.

If the current first distribution network device is not the to-be-configured device with the highest communication connection quality, it is determined that the first distribution network device is to be updated, and the to-be-configured device with the highest communication connection quality with the router may be determined from the to-be-configured devices in the communication connection as the updated first distribution network device.

If the current first distribution network device is the to-be-configured device with the highest communication connection quality, it is determined that the first distribution network device is not to be updated. If the first distribution network device is not updated, the to-be-configured device in the communication connection continues to detect the communication connection quality between each to-be-configured device and the router.

In step S812, the updated first distribution network device establishes a new communication connection with the router, and the network topology structure of the to-be-configured devices in the device list is updated based on the new communication connection. The updated first distribution network device establishes a new communication connection with the router, and the network topology structure of the to-be-configured devices in the device list is updated based on the new communication connection.

In step S814, the process ends.

With the method, interconnection and intercommunication of all the to-be-configured devices in the device list can be implemented, and the first distribution network device with the highest communication connection quality always remains in communication connection with the router, that is, multiple photovoltaic devices can be connected to the network stably, so that multiple to-be-configured photovoltaic devices are connected to the router without additional hardware, improving the communication quality between the photovoltaic device and the router, and reducing the hardware cost and the maintenance cost of the photovoltaic distribution network system.

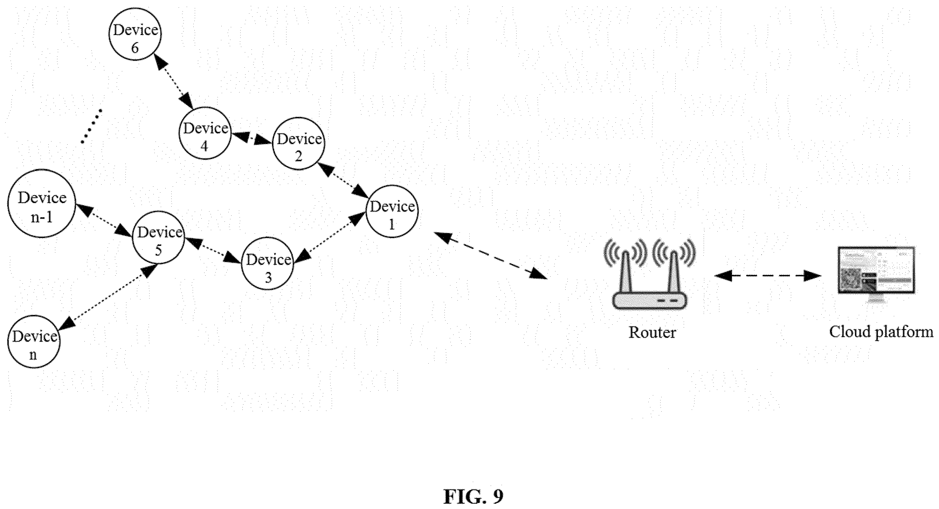

With the method, multiple photovoltaic devices may be connected to the network stably, finally forming a network topology structure shown in FIG. 9.

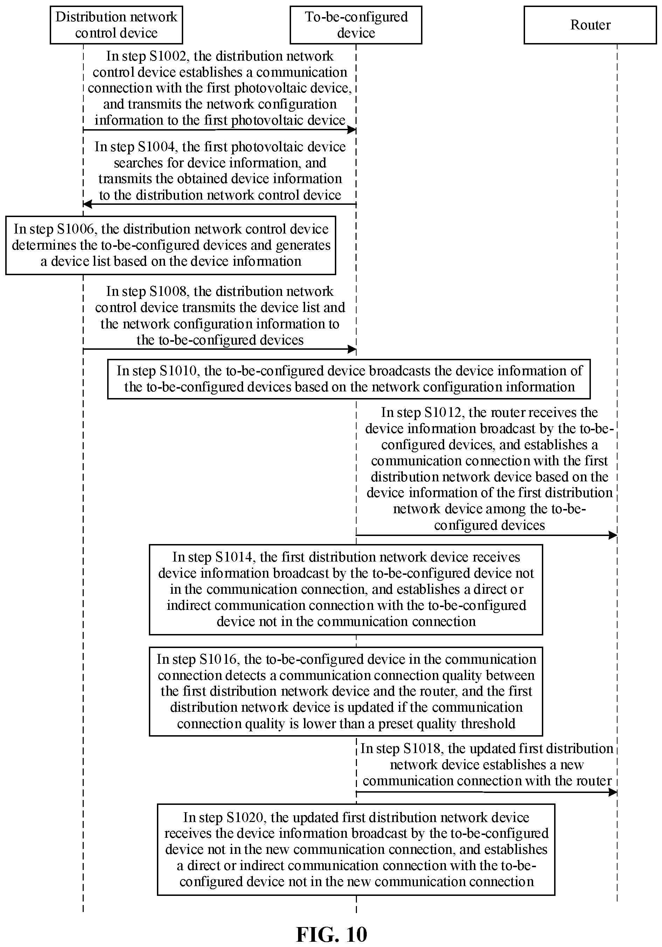

For ease of understanding, FIG. 10 provides a schematic diagram of three-party interaction in a network configuration method for a photovoltaic distribution network system according to an embodiment of the present disclosure. The method is implemented by interaction between the distribution network control device, the to-be-configured device and the router, where the to-be-configured device at least includes a first photovoltaic device and a first distribution network device. The detailed interaction process includes the following steps S1002, S1004, S1006, S1008, S1010, S1012, S1014, S1016, S1018 and S1020.

In step S1002, the distribution network control device establishes a communication connection with the first photovoltaic device, and transmits the network configuration information to the first photovoltaic device. The network configuration information may control the to-be-configured device to access to a specified network, and the specified network may be a mesh network. The network configuration information may include an account and a password of the specified network or other information. The distribution network control device may obtain the device information of the first photovoltaic device by scanning the device identifier of the photovoltaic device, establish a communication connection with the photovoltaic device, and transmit the network configuration information to the first photovoltaic device.

In step S1004, the first photovoltaic device searches for device information, and transmits the obtained device information to the distribution network control device. The first photovoltaic device may also obtain device information of other photovoltaic devices, and transmit the obtained device information to the distribution network control device, so that the distribution network control device determines the to-be-configured device based on the received device information.

In step S1006, the distribution network control device determines the to-be-configured devices and generates a device list based on the device information.

In step S1008, the distribution network control device transmits the device list and the network configuration information to the to-be-configured devices. The distribution network control device transmits the device list and the network configuration information to the to-be-configured devices to control the to-be-configured devices in the device list to access to the specified network corresponding to the network configuration information.

In step S 1010, the to-be-configured device broadcasts the device information of the to-be-configured devices based on the network configuration information.

In step S1012, the router receives the device information broadcast by the to-be-configured devices, and establishes a communication connection with the first distribution network device among the to-be-configured devices based on the device information of the first distribution network device. The first distribution network device may be any to-be-configured device accessing to the specified network. In an embodiment, the first distribution network device may be a to-be-configured device corresponding to device information indicating the strongest broadcast signal if the router receives the device information broadcast by the to-be-configured device. Specifically, the router may receive the device information broadcast by the to-be-configured devices, then obtain the device information of the first distribution network device accessing to the specified network from these device information, and establish the communication connection with the first distribution network device.

In step S1014, the first distribution network device receives device information broadcast by the to-be-configured device not in the communication connection, and establishes a direct or indirect communication connection with the to-be-configured device not in the communication connection.

The first distribution network device in communication connection with the router may receive, through the specified network, the device information broadcast by the to-be-configured devices, and the first distribution network device may establish, through these device information, a direct or indirect communication connection with the to-be-configured device that has accessed to the specified network but not in the communication connection with the router, so that all the to-be-configured devices accessing to the specified network are in the communication connection with the router.

In step S 1016, the to-be-configured device in the communication connection detects a communication connection quality between the first distribution network device and the router. The first distribution network device is updated if the communication connection quality is lower than a preset quality threshold. The to-be-configured device in the communication connection may further detect the communication connection quality between the first distribution network device and the router and may automatically update the first distribution network device if the communication connection quality is lower than the preset quality threshold.

In step S1018, the updated first distribution network device establishes a new communication connection with the router. The updated first distribution network device may replace the previous first distribution network device to establish a new communication connection with the router.

In step S 1020, the updated first distribution network device receives the device information broadcast by the to-be-configured device not in the new communication connection, and establishes a direct or indirect communication connection with the to-be-configured device not in the new communication connection.

The updated first distribution network device re-determines a corresponding second distribution network device, so as to establish a direct or indirect communication connection with the to-be-configured device not in the new communication connection, to obtain an updated network topology structure of the to-be-configured devices.

This method has the following effects. The solution has good universality, only needs any one device accessing to a network stably, has no special requirement for the router, and is easy to expand. The arrangement of the photovoltaic device is not affected by the number of current devices, and the photovoltaic device may automatically access to the mesh network and implement networking. Further, the solution has high performance and low cost, and can automatically find the optimal signal path, ensuring stable and reliable communication without additional hardware.

In addition, in the description of the embodiments of the present disclosure, unless otherwise specified and limited, the terms "installed", "connected", and "connection" should be understood in a broad sense. For example, it may be a fixed connection, a detachable connection, or an integrated connection; it may be a mechanical connection, or may be an electrical connection; it may be a direct connection, or may be indirectly connected by using an intermediate medium, and may be a communication inside two elements. For those skilled in the art, the specific meanings of the terms in the present disclosure can be understood based on specific situations.

In a case that the function is implemented in a form of a software functional unit and sold or used as an independent product, the function may be stored in a computer readable storage medium. Based on such understanding, the technical solution of the present disclosure essentially or a part contributing to the prior art or a part of the technical solution may be embodied in the form of a software product, and the computer software product is stored in a storage medium, and includes multiple instructions for causing a computer device (which may be a personal computer, a server, or a network device) to perform all or part of the steps of the method in the embodiments of the present disclosure. The foregoing storage medium includes a U disk, a removable hard disk, a read-only memory (ROM), a random-access memory (RAM), a magnetic disk, an optical disk, or other media that can store program codes.

In the description of the present disclosure, it should be noted that, the terms "center", "upper", "lower", "left", "right", "vertical", "horizontal", "inner" and "outer", etc., indicate the orientation or positional relationship based on the orientation or positional relationship shown in the drawings, and are only for the convenience of describing the present disclosure and simplifying description, and do not indicate or imply that the device or element referred to must have a specific orientation, be constructed and operated in a specific orientation, therefore, the terms cannot be understood as a limitation of the present disclosure. In addition, terms such as "first", "second", "third" and the like are merely for description, and should not be construed as indicating or implying relative importance.

Finally, it should be noted that the above embodiments are only specific embodiments of the present disclosure to illustrate the technical solutions of the present disclosure, but not to limit the technical solutions of the present disclosure, and the protection scope of the present disclosure is not limited thereto. Although the present disclosure is described in detail with reference to the foregoing embodiments, and those skilled in the art should understand that those skilled in the art can still modify or change the technical solutions described in the foregoing embodiments within the technical scope disclosed in the present disclosure, or equivalently replace some of the technical features therein; such modifications, changes or substitutions without departing from the spirit and scope of the technical solutions of the embodiments of the present disclosure shall fall within the protection scope of the present disclosure. Therefore, the protection scope of the present disclosure shall be subject to the protection scope of the claims.

## Claims

1. A photovoltaic distribution network system, comprising:
a distribution network control device,
a plurality of photovoltaic devices; and
a router, wherein
the distribution network control device is configured to generate a device list comprising device information of to-be-configured devices, and transmit the device list and network configuration information to the to-be-configured devices, wherein the to-be-configured devices comprise at least one of the plurality of photovoltaic devices, and the network configuration information is for controlling access to a specified network;
the to-be-configured device is configured to broadcast the device information of the to-be-configured devices based on the network configuration information;
the router is configured to receive the device information broadcast by the to-be-configured device, and establish a communication connection with a first distribution network device among the to-be-configured devices based on device information of the first distribution network device; and
the first distribution network device is configured to receive device information broadcast by a to-be-configured device not in a communication connection, and establish a direct or indirect communication connection with the to-be-configured device not in the communication connection based on the device information broadcast by the to-be-configured device not in the communication connection.

2. The photovoltaic distribution network system according to claim 1, wherein the distribution network control device is further configured to scan device identifiers of the to-be-configured devices to obtain the device information of the to-be-configured devices.

3. The photovoltaic distribution network system according to claim 1, wherein the distribution network control device is further configured to establish a communication connection with a first photovoltaic device among the plurality of photovoltaic devices, and transmit the network configuration information to the first photovoltaic device;
the first photovoltaic device is configured to search for device information, determine the obtained device information as device information of a candidate distribution network device, and transmit the device information of the candidate distribution network device to the distribution network control device,
wherein the distribution network control device is further configured to determine the to-be-configured device based on the device information of the candidate distribution network device.

4. The photovoltaic distribution network system according to claim 3, wherein
the distribution network control device is further configured to transmit the device list to the first photovoltaic device; and
the first photovoltaic device is further configured to transmit the device list and the network configuration information to the to-be-configured devices.

5. The photovoltaic distribution network system according to claim 1, wherein
the distribution network control device is further configured to transmit query information to each of the to-be-configured devices, wherein the query information is used to query whether the device list and the network configuration information are received by the to-be-configured device; and
the to-be-configured device is further configured to transmit, on receipt of the device list and the network configuration information, confirmation information corresponding to the query information to the distribution network control device.

6. The photovoltaic distribution network system according to claim 1, wherein the router is further configured to:
determine, based on the received device information broadcast by the to-be-configured device, a to-be-configured device corresponding to device information indicating the strongest broadcast signal as the first distribution network device.

7. The photovoltaic distribution network system according to claim 1, wherein
the first distribution network device is further configured to determine, based on the device information broadcast by the to-be-configured device not in the communication connection, a second distribution network device from the to-be-configured device not in the communication connection; and establish a communication connection with the second distribution network device based on device information of the second distribution network device; and
the second distribution network device is configured to determine the second distribution network device as an updated first distribution network device, and continue to perform the process of determining a second distribution network device from the to-be-configured device not in the communication connection based on the device information broadcast by the to-be-configured device not in the communication connection; and establishing a communication connection with the second distribution network device based on device information of the second distribution network device until all the to-be-configured devices are in the communication connection.

8. The photovoltaic distribution network system according to claim 7, wherein the first distribution network device is further configured to:
determine a to-be-configured device corresponding to device information indicating a broadcast signal strength reaching a preset strength threshold as the second distribution network device based on the device information broadcast by the to-be-configured device not in the communication connection.

9. The photovoltaic distribution network system according to claim 8, wherein the first distribution network device is further configured to:
select, if a quantity of the to-be-configured device corresponding to the device information indicating the broadcast signal strength reaching the preset strength threshold is greater than a preset quantity threshold, the preset quantity threshold of the to-be-configured device as the second distribution network device from the to-be-configured device corresponding to the device information indicating the broadcast signal strength reaching the preset strength threshold.

10. The photovoltaic distribution network system according to claim 1, wherein
a to-be-configured device in a communication connection is configured to detect a communication connection quality between the first distribution network device and the router; and update the first distribution network device if the communication connection quality is lower than a preset quality threshold; and
the updated first distribution network device is configured to establish a new communication connection with the router; receive device information broadcast by the to-be-configured device not in the new communication connection, and establish a direct or indirect communication connection with the to-be-configured device not in the new communication connection based on the device information broadcast by the to-be-configured device not in the new communication connection.

11. The photovoltaic distribution network system according to claim 10, wherein the to-be-configured device in the communication connection is further configured to:
obtain a communication connection quality between each of the to-be-configured devices and the router; and
determine the to-be-configured device with the highest communication connection quality as the updated first distribution network device.

12. A network configuration method for a photovoltaic distribution network system, wherein the method is applied to the photovoltaic distribution network system according to any one of claims 1 to 11, the photovoltaic distribution network system comprises the distribution network control device, the plurality of photovoltaic devices and the router; and the method comprises:
generating, by the distribution network control device, a device list comprising device information of to-be-configured devices, and transmitting, by the distribution network control device, the device list and network configuration information to the to-be-configured devices, wherein the to-be-configured devices comprise at least one of the plurality of photovoltaic devices, and the network configuration information is for controlling access to a specified network;
broadcasting, by the to-be-configured device, device information of the to-be-configured devices based on the network configuration information;
receiving, by the router, the device information broadcast by the to-be-configured device, and establishing, by the router, a communication connection with a first distribution network device among the to-be-configured devices based on device information of the first distribution network device; and
receiving, by the first distribution network device, device information broadcast by a to-be-configured device not in a communication connection, and establishing, by the first distribution network device, a direct or indirect communication connection with the to-be-configured device not in the communication connection based on the device information broadcast by the to-be-configured device not in the communication connection.
